# EUROPEAN PATENT APPLICATION

(11) **EP 4 386 878 A1**
(43) Date of publication of application: **19.06.2024**
(21) Application number: 22942148.2
(22) Date of filing: 20.05.2022
(51) Int. Cl.: H01M 4/00

(54) **POLE, BATTERY CELL, BATTERY, ELECTRIC DEVICE, AND FABRICATION METHOD FOR POLE**

(71) Applicant: Contemporary Amperex Technology Co., Limited, Ningde, Fujian 352100 (CN)
(72) Inventor: WANG, Manman, Ningde, Fujian 352100 (CN); LIU, Feng, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2022/094185
(87) International publication number: WO 2023/221109

(57) **Abstract**

Embodiments of the present application provide a pole, a battery cell, a battery, an electric device, and a fabrication method for the pole. The pole comprises a porous current collector, the porous current collector comprises a body part and an end part which are integrally formed, the weight per unit area of the end part is larger than the weight per unit area of the body part, the thickness of the end part is smaller than the thickness of the body part, the thickness of the end part is D1, and 5 µm≤D1≤100 µm. The pole has a simple fabrication process and is easy to machine.

## Description

### Technical Field

The present application relates to the field of battery technology, and in particular, to an electrode sheet, a battery cell, a battery, an electrical device, and a manufacturing method for an electrode sheet.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery technology is an important factor related to their development.

An electrode sheet is an important component of a battery cell. The electrode sheet includes a current collector. When the current collector is a porous current collector, the porous current collector cannot be welded with other components due to the porous structure and weak mechanical strength of the porous current collector.

### Summary

The present application aims to provide an electrode sheet, a battery cell, a battery, an electrical device, and a manufacturing method for an electrode sheet. The electrode sheet has high mechanical strength at its end portion and therefore can be welded with other components.

The present application is implemented through the following technical solutions.

In a first aspect, the present application provides an electrode sheet, including a porous current collector, where the porous current collector includes a main body and an end portion integrally formed, a weight per unit area of the end portion is greater than that of the main body, a thickness of the end portion is less than that of the main body, and the thickness of the end portion is D1, which satisfies 5 µm ≤ D1 ≤ 100 µm.

According to the electrode sheet provided by embodiments of the present application, the weight per unit area of the end portion is greater than that of the main body, the thickness of the end portion is less than that of the main body, and the end portion may be a compressed portion of the porous current collector, has high mechanical strength, and can serve as a tab of the electrode sheet to facilitate welding with other components. Meanwhile, the thickness of the end portion satisfies the foregoing range, which meets requirements of die cutting to facilitate machining and concentrates current distribution of the end portion to achieve good cycle performance.

According to some embodiments of the present application, 5 µm ≤ D1 ≤ 50 µm.

According to some embodiments of the present application, 10 µm ≤ D1 ≤ 20 µm.

According to some embodiments of the present application, the thickness of the main body is D2, which satisfies 10% ≤ D1/D2 ≤ 15%.

In the foregoing solution, when the thickness of the main body is constant, the thickness of the end portion and the thickness of the main body satisfy the foregoing relationship, so that the end portion has good machining performance and concentrated current distribution of the end portion is ensured.

According to some embodiments of the present application, the end portion and the main body are arranged in a first direction, and a size of the end portion in the first direction is B, which satisfies 5 mm ≤ B ≤ 20 mm.

In the foregoing solution, the size of the end portion in the first direction satisfies the foregoing range, which enables the end portion to have a large area of connection with another component.

According to some embodiments of the present application, 6 mm ≤ B ≤ 9 mm.

According to some embodiments of the present application, the end portion and the main body are arranged in the first direction, a size of the porous current collector in the first direction is A, and the size of the end portion in the first direction is B, satisfying 5% ≤ B/A ≤ 20%.

In the foregoing solution, when the size of the porous current collector in the first direction is constant, the size of the end portion in the first direction and the size of the porous current collector in the first direction satisfy the foregoing relationship. On the one hand, the end portion has a large area of connection with another component. On the other hand, a larger size of the main body in the first direction is ensured, so that the porous current collector has more metal ion deposition sites.

According to some embodiments of the present application, 5% ≤ B/A ≤ 10%.

According to some embodiments of the present application, a porosity of the end portion is 50-80%.

According to some embodiments of the present application, the porosity of the end portion is 62.5-75%.

According to some embodiments of the present application, an areal density of the end portion is 300-500 g/m².

In the foregoing solution, the areal density of the end portion satisfies the foregoing range, so that the structure of the end portion is compact to improve strength and cutting performance of the end portion.

According to some embodiments of the present application, the areal density of the end portion is 350-450 g/m².

According to some embodiments of the present application, in the thickness direction of the porous current collector, the main body has a first surface and a third surface that are opposite, the end portion has a second surface and a fourth surface that are opposite, and both the second surface and the fourth surface are located between a plane where the first surface is located and a plane where the third surface is located.

In the foregoing solution, the end portion is located between the first surface and the third surface in the thickness direction, which can reduce stress concentration at a transition place between the end portion and the main body and reduce a probability of fracture of the end portion.

According to some embodiments of the present application, the porous current collector further includes a transition portion, the transition portion connects the main body and the end portion, and a thickness of the transition portion gradually decreases from a side connected with the main body to a side connected with the end portion.

In the foregoing solution, the transition portion connects the main body and the end portion to facilitate machining and reduce machining difficulties.

According to some embodiments of the present application, the main body has a first surface, the end portion has a second surface, the transition portion has a first transition surface, the first transition surface connects the first surface and the second surface, and the first transition surface is an arc surface tangent to the second surface.

In the foregoing solution, the first transition surface is tangent to the second surface, so that a machining mold is simple in structure and the electrode sheet is convenient to manufacture.

According to some embodiments of the present application, a curvature radius of the first transition surface is R, which satisfies 15 mm ≤ R ≤ 25 mm.

In the foregoing solution, the curvature radius of the first transition surface satisfies the foregoing range, which facilitates machining of the electrode sheet.

According to some embodiments of the present application, the main body has a third surface opposite to the first surface, the end portion has a fourth surface opposite to the second surface, the transition portion has a second transition surface opposite to the first transition surface, the second transition surface connects the third surface and the fourth surface, and the second transition surface is an arc surface tangent to the fourth surface.

In the foregoing solution, the second transition surface connects the third surface and the fourth surface, and the second transition surface is tangent to the fourth surface, so as to facilitate the manufacturing of the electrode sheet.

According to some embodiments of the present application, the second transition surface is symmetric with the first transition surface.

In the foregoing solution, the end portion is formed by squeezing/pressing the porous current collector on the two opposite sides, so as to facilitate the machining of the electrode sheet and ensure the concentrated current distribution of the end portion.

According to some embodiments of the present application, the end portion, the transition portion, and the main body are arranged in the first direction, and a size of the transition portion in the first direction is C, which satisfies 0.5 mm ≤ C ≤ 2 mm.

In the foregoing solution, the size of the transition portion in the first direction satisfies the foregoing range, which facilitates the machining of the end portion.

According to some embodiments of the present application, the electrode sheet further includes an active material layer, and the active material layer is disposed on a surface of the main body.

In the foregoing solution, the active material layer is disposed on the surface of the main body, so that the electrode sheet has a higher active material capacity.

According to some embodiments of the present application, the porous current collector is made of a foam metal.

In the foregoing solution, the foam metal has good mechanical properties.

In a second aspect, the present application provides a battery cell, including: a shell assembly, including an electrode leading-out portion; and an electrode assembly accommodated in the shell assembly, where the electrode assembly includes a first electrode sheet and a second electrode sheet with opposite polarities, at least one of the first electrode sheet and the second electrode sheet is the electrode sheet provided by the foregoing embodiments, and the end portion is electrically connected to the electrode leading-out portion.

According to the battery cell of the embodiment of the present application, at least one of the first electrode sheet and the second electrode sheet is the foregoing electrode sheet, where the end portion of the electrode sheet has high mechanical strength to facilitate the electrical connection between the electrode assembly and the electrode leading-out portion.

In a third aspect, the present application provides a battery, including a box body and a plurality of battery cells provided by the foregoing embodiments, where the plurality of battery cells are accommodated in the box body.

In a fourth aspect, the present application provides an electrical device, including at least one battery cell provided by the foregoing embodiments, where the at least one battery cell is used for providing electrical energy.

In a fifth aspect, the present application provides a manufacturing method for an electrode sheet, including: providing a porous current collector; and pressing an end portion of the porous current collector from two sides of the porous current collector in a thickness direction, so that a thickness of the end portion is compressed to 5-100 µm.

According to the manufacturing method for an electrode sheet in the embodiments of the present application, the manufacturing process is simple, the end portion of the manufactured electrode sheet has high mechanical strength to meet requirements of die cutting and facilitate machining, and current distribution at the end portion is concentrated to achieve good cycle performance.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and the specific embodiments of the present application are cited below.

### Brief Description of Drawings

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
FIG. 1 is a schematic structural diagram of a vehicle provided by some embodiments of the present application;
FIG. 2 is a schematic structural diagram of a battery provided by some embodiments of the present application;
FIG. 3 is a schematic structural diagram of a battery cell provided by some embodiments of the present application;
FIG. 4 is a three-dimensional diagram of an electrode sheet provided by some embodiments of the present application;
FIG. 5 is a schematic structural diagram of the electrode sheet provided by some embodiments of the present application;
FIG. 6 is a schematic structural diagram of a porous current collector provided by some embodiments of the present application;
FIG. 7 is a schematic structural diagram of a porous current collector provided by other embodiments of the present application;
FIG. 8 is a schematic structural diagram of an electrode sheet provided by other embodiments of the present application;
FIG. 9 is a schematic flowchart of a manufacturing method for an electrode sheet provided by some embodiments of the present application; and
FIG. 10 is a brief schematic diagram of a manufacturing device for an electrode sheet provided by some embodiments of the present application.

The drawings are not drawn to actual scale.

Reference numerals: 100 - battery; 10 - box body; 11 - first portion; 12 - second portion; 20 - battery cell; 21 - end cover; 21a - electrode terminal; 22 - shell; 23 - electrode assembly; 23a - tab; 30 - electrode sheet; 31 - porous current collector; 311 - main body; 3111 - first surface; 3112 - third surface; 312 - end portion; 3121 - second surface; 3122 - fourth surface; 313 - transition portion; 3131 - first transition surface; 3132 - second transition surface; 32 - active material layer; 200 - controller; 300 - motor; 1000 - vehicle.

### Detailed Description of Embodiments

Implementations of the present application will be further described in detail below in conjunction with the accompanying drawings and embodiments. The detailed description of the following embodiments and the drawings are used to exemplarily illustrate the principle of the present application, but cannot be used to limit the scope of the present application, that is, the present application is not limited to the described embodiments.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the specification and claims of the present application, the accompanying drawings, and any variations thereof, are intended to cover non-exclusive inclusion.

In the description of the embodiments of the present application, the technical terms "first", "second", and the like are only used to distinguish different objects and cannot be understood as indicating or implying relative importance or implying a quantity, specific order, or primary and secondary relationship of the indicated technical features. In the description of the embodiments of the present application, the meaning of "a plurality of" is two or more, unless otherwise specifically defined.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "and/or" merely describes an association relationship between associated objects, and represents that three relationships may exist. For example, A and/or B may represent the following three cases: A exists, both A and B exist, and B exists. In addition, the character "/" herein generally indicates an "or" relationship between successive associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial", "radial", "circumferential", or the like is based on an orientation or positional relationship shown in the drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the terms "mount", "link", "connect", "fix", and the like should be understood in a broad sense, for example, "connection" may be a fixed connection, a detachable connection, an integrated connection, a mechanical connection, an electrical connection, a direct connection, an indirect connection via an intermediate medium, communication between interiors of two elements, or interaction between two elements. Those of ordinary skill in the art may appreciate the specific meanings of the foregoing terms in the embodiments of the present application according to specific circumstances.

In the present application, the mentioned battery refers to a single physical module that includes one or more battery cells to provide higher voltage and capacity. For example, the battery mentioned in the present application may include a battery module or a battery pack.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the current collector not coated with the positive electrode active material layer is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. In some embodiments, the negative electrode sheet includes a negative electrode current collector, a material of the negative electrode current collector may be copper, and the negative electrode current collector is not coated with any active material. In some embodiments, the negative electrode sheet includes a negative electrode current collector and a negative electrode active material layer, a surface of the negative electrode current collector is coated with the negative electrode active material layer, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like.

In the prior art, the current collector may be a porous current collector, such as made of a foam metal. The porous current collector has high porosity and numerous metal ion deposition sites, and especially can effectively inhibit growth of lithium dendrites and alleviate volume changes in lithium-ion batteries to significantly improve deposition behavior and electrochemical performance of lithium metal. However, due to the high porosity and low mechanical strength of the porous current collector, other components (such as an electrode terminal, a shell, and an adapter) cannot be directly welded to the porous current collector.

In view of this, the present application provides an electrode sheet in which an end of a porous current collector is compressed to form a tab with high mechanical strength. Meanwhile, a thickness of the end is compressed to 5 µm ≤ D1 ≤ 100 µm. On the one hand, requirements of die cutting are met, and machining is convenient. On the other hand, current distribution at the end is concentrated, resulting in good cycle performance.

The battery cell disclosed in the embodiments of the present application may be used, but not limited to, in an electrical device such as a vehicle, a ship, or an aircraft. A power system of the electrical device may be constituted by the battery cell, the battery, or the like disclosed in the present application.

An embodiment of the present application provides an electrical device using a battery as a power supply. The electrical device may be, but is not limited to, a mobile phone, a tablet computer, a notebook computer, an electric toy, an electric tool, an electric bicycle, an electric motorcycle, an electric vehicle, a ship, a spacecraft, or the like. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

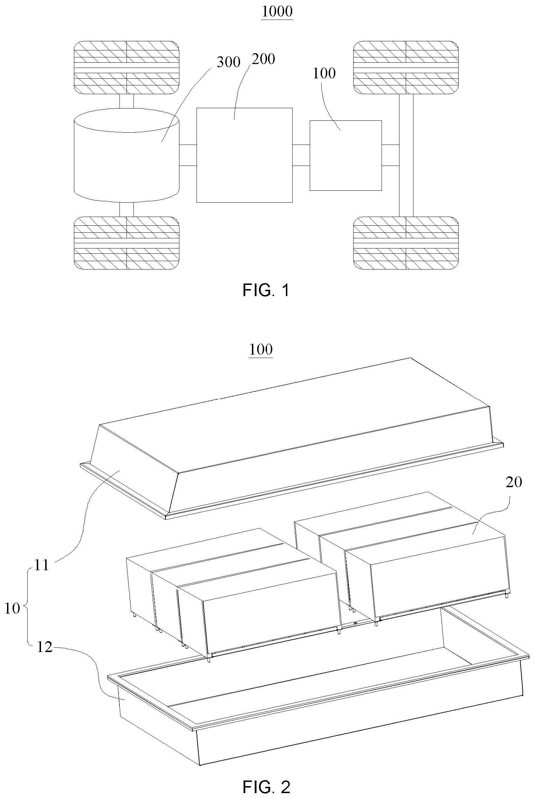

Referring to FIG. 1, FIG. 1 is a schematic structural diagram of a vehicle 1000 provided by some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000 and used for a circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is a schematic structural diagram of the battery 100 provided by some embodiments of the present application. The battery 100 includes a box body 10 and battery cells 20, where the battery cells 20 are accommodated in the box body 10. The box body 10 is used for providing an accommodating space for the battery cells 20, and the box body 10 may have many structures. In some embodiments, the box body 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box body 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box body 10. The battery 100 may further include other structures, for example, the battery 100 may further include a current collecting component for achieving electrical connection between the plurality of battery cells 20.

Each battery cell 20 may be a secondary battery or a primary battery, or may be a lithium-sulfur battery, a sodium-ion battery, or a magnesium-ion battery, but is not limited to this.

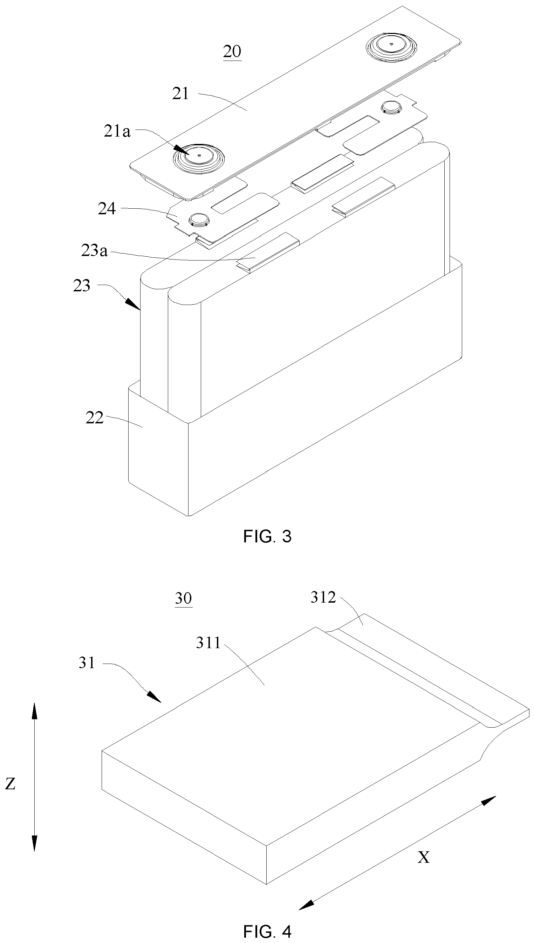

Referring to FIG. 3, FIG. 3 is a schematic structural diagram of the battery cell 20 provided by some embodiments of the present application. The battery cell 20 refers to a minimum unit that constitutes a battery. As shown in FIG. 3, the battery cell 20 includes a shell assembly, an electrode assembly 23, and other functional components. The shell assembly includes an end cover 21 and a shell 22, and an electrode leading-out portion is disposed in at least one of the end cover 21 and the shell 22.

The end cover 21 refers to a component that is closed to an opening of the shell 22 to isolate an internal environment of the battery cell 20 from an external environment. Unlimitedly, a shape of the end cover 21 may adapt to that of the shell 22 to fit the shell 22. Optionally, the end cover 21 may be made of a material with certain hardness and strength (such as aluminum alloy). In this case, the end cover 21 is less prone to deformation during pressing and colliding, so that the battery cell 20 can have higher structural strength and its safety can be improved. An electrode leading-out portion (electrode terminal 21a) may be disposed on the end cover 21, and the electrode terminal 21a may be used for electrical connection with the electrode assembly 23 to output or input electrical energy of the battery cell 20. In some embodiments, a pressure relief mechanism may be further disposed on the end cover 21 to release internal pressure when the internal pressure or temperature of the battery cell 20 reaches a threshold. A material of the end cover 21 may be various, such as copper, iron, aluminum, stainless steel, aluminum alloy, or plastic, and is not specially limited in the embodiments of the present application. In some embodiments, an insulating member may be further disposed on an inner side of the end cover 21, and the insulating member may be used for isolating electrical connection components inside the shell 22 from the cover body 21 to reduce a risk of short-circuiting. For example, the insulating member may be made of plastic, rubber, or the like.

The shell 22 is a component fitting the end cover 21 to form an internal environment of the battery cell 20, where the formed internal environment may be used for accommodating the electrode assembly 23, an electrolytic solution, and other components. The shell 22 and the end cover 21 may be independent components, the shell 22 may be provided with an opening, and the cover body 21 is closed to the opening to form the internal environment of the battery cell 20. Unlimitedly, the end cover 21 and the shell 22 may be integrated. Specifically, the end cover 21 and the shell 22 may form a common connection surface before other components are put into the shell. When the interior of the shell 22 is to be encapsulated, the end cover 21 is closed to the shell 22. The shell 22 may be in many shapes and sizes, such as cuboid, cylinder, or hexagonal prism. Specifically, the shape of the shell 22 may be determined according to a specific shape and size of the electrode assembly 23. A material of the shell 22 may be various, such as copper, iron, aluminum, stainless steel, aluminum alloy, or plastic, and is not specially limited in the embodiments of the present application. An electrode leading-out portion may be disposed on the shell 22, and the electrode leading-out portion is used for electrical connection with a tab to output or input the electrical energy of the battery cell 20.

The electrode assembly 23 is a component that undergoes electrochemical reactions in the battery cell 100. The shell 22 may contain one or more electrode assemblies 23. The electrode assembly 23 is mainly formed by winding or laminating a positive electrode sheet and a negative electrode sheet, and a separator is usually disposed between the positive electrode sheet and the negative electrode sheet, where the separator is used for separating the positive electrode sheet and the negative electrode sheet to avoid an internal short circuit between the positive electrode sheet and the negative electrode sheet. Tabs 23a extend out of ends of the positive electrode sheet and the negative electrode sheet separately. The positive electrode tab and the negative electrode tab may be located at one end of the electrode assembly 23 together or at two ends of the electrode assembly 23 separately. In charging and discharging processes of the battery, the positive and negative electrode active materials react with the electrolytic solution, and the tabs 23a are connected to the electrode leading-out portions through adapters 24 to form a current circuit.

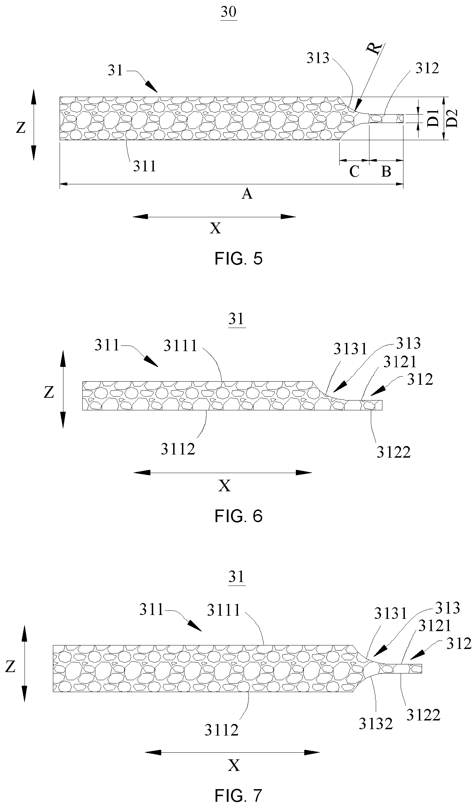

According to some embodiments of the present application, referring to FIG. 4 and FIG. 5, FIG. 4 is a three-dimensional diagram of an electrode sheet 30 provided by some embodiments of the present application, and FIG. 5 is a schematic structural diagram of the electrode sheet 30 provided by some embodiments of the present application. The present application provides an electrode sheet 30. The electrode sheet 30 includes a porous current collector 31, the porous current collector 31 includes a main body 311 and an end portion 312 integrally formed, a weight per unit area of the end portion 312 is greater than that of the main body 311, a thickness of the end portion 312 is less than that of the main body 311, and the thickness of the end portion 312 is D1, which satisfies 5 µm ≤ D1 ≤ 100 µm.

The porous current collector 31 may be a metal conductor. The porous current collector 31 is of a porous structure, which may be formed by pores in a material or by machining.

In the figures, the direction indicated by the letter Z is a thickness direction of the porous current collector 31. The thickness D1 of the end portion 312 is a size of the end portion 312 in the thickness direction Z, and the thickness of the main body is a size of the main body in the thickness direction Z.

The main body 311 and the end portion 312 are components of the porous current collector 31, and the end portion 312 is a thinner portion of the porous current collector 31.

For a positive electrode sheet, the main body 311 is a portion of the positive electrode sheet that is coated with a positive electrode active material. For a negative electrode sheet, the main body 311 is a portion opposite to the main body 311 of the positive electrode sheet. Specifically, when the surface of the negative electrode sheet is not coated with any active material, the main body 311 is a portion used for receiving metal ions of the positive electrode active material. When the surface of the negative electrode sheet is coated with an active material, the main body 311 is a portion of the negative electrode sheet that is coated with the negative electrode active material.

The end portion 312 is located at one end of the main body 311. For example, the end portion 312 and the main body 311 may be arranged in a preset direction.

The weight per unit area of the end portion 312 is greater than that of the main body 311, and the thickness of the end portion 312 is less than that of the main body 311. The end portion 312 may be formed by compressing the porous current collector 31.

When the thickness D1 of the end portion 312 satisfies 5 µm ≤ D1 ≤ 100 µm, the thickness D1 of the end portion 312 may be 5 µm, 10 µm, 20 µm, 30 µm, 40 µm, 50 µm, 60 µm, 70 µm, 75 µm, 80 µm, 90 µm, 100 µm, or the like.

When the thickness D1 of the end portion 312 is less than 5 µm and the end portion 312 is formed by compressing the porous current collector 31, the end portion 312 is prone to tearing, so that the end portion 312 does not meet requirements of die cutting and the end portion 312 cannot serve as a tab 23a. When the thickness D1 of the end portion 312 is greater than 100 µm, current distribution at the end portion 312 is dispersed, resulting in poor cycle performance.

According to the electrode sheet 30 of the embodiments of the present application, the end portion 312 may be a compressed portion of the porous current collector 31, the end portion 312 has high mechanical strength, and the end portion 312 can serve as a tab 23a of the electrode sheet 30 to facilitate welding with other components (such as the electrode terminal 21a, the shell 22, or the adapter 24) to output electrical energy. Meanwhile, the thickness of the end portion 312 satisfies the foregoing range, which meets the requirements of die cutting to facilitate machining and concentrates the current distribution of the end portion 312 to achieve good cycle performance.

It should be pointed out that the end portion 312 serving as the tab 23a of the electrode sheet 30 can be directly connected to the electrode terminal 21a, the shell 22, or the adapter 24.

According to some embodiments of the present application, 5 µm ≤ D1 ≤ 50 µm.

Optionally, the thickness D1 of the end portion 312 may be 5 µm, 10 µm, 15 µm, 20 µm, 30 µm, 40 µm, 50 µm, or the like.

Compared with the situation that the thickness D1 of the end portion 312 satisfies 50 µm < D1 ≤ 100 µm, when the thickness D1 of the end portion 312 satisfies 5 µm ≤ D1 ≤ 50 µm, the weight per unit area of the end portion 312 is larger, and the mechanical strength is higher.

According to some embodiments of the present application, 10 µm ≤ D1 ≤ 20 µm.

Compared with the situation that the thickness D1 of the end portion 312 satisfies 5 µm ≤ D1 < 10 µm, when the thickness D1 of the end portion 312 satisfies 10 µm ≤ D1 ≤ 20 µm, the weight per unit area of the end portion 312 is larger, and the mechanical strength is higher.

Optionally, the thickness D1 of the end portion 312 may be 10 µm, 12 µm, 15 µm, 18 µm, 20 µm, or the like.

According to some embodiments of the present application, as shown in FIG. 5, the thickness of the main body 311 is D2, which satisfies 10% ≤ D1/D2 ≤ 15%.

If D1/D2 is less than 10%, the thickness D1 of the end portion 312 is smaller, the machining difficulty of the end portion 312 is higher, and the end portion 312 is prone to cracking. If D1/D2 is greater than 15%, the thickness D1 of end portion 312 is larger, and the current distribution of the end portion 312 is more dispersed, resulting in poor cycle performance.

In the foregoing solution, when the thickness D1 of the main body 311 is constant, the thickness of the end portion 312 and the thickness of the main body 311 satisfy 10% ≤ D1/D2 ≤ 15%, so that the end portion 312 has good machining performance and concentrated current distribution of the end portion 312 is ensured.

According to some embodiments of the present application, as shown in FIG. 5, the end portion 312 and the main body 311 are arranged in a first direction X, and a size of the end portion 312 in the first direction X is B, which satisfies 5 mm ≤ B ≤ 20 mm.

The first direction X is perpendicular to the thickness direction Z.

"The end portion 312 and the main body 311 are arranged in a first direction X" indicates that the end portion 312 is located on one side of the main body 311 in the first direction X.

If the size B of the end portion 312 in the first direction X is less than 5 mm, there is a smaller connection area between the end portion 312 and another component, which is not conducive to the connection between the end portion 312 and the component. If the size B of the end portion 312 in the first direction X is greater than 20 mm, the end portion 312 occupies a larger size in the first direction X, resulting in a smaller size of the main portion 311 and fewer metal ion deposition sites of the porous current collector 31. In addition, the main portion 311 serves as an attachment site of the active material, and the smaller size of the main portion 311 causes a lower active material capacity of the electrode sheet 30, so that the energy density of the battery cell is lower.

In the foregoing solution, the size B of the end portion 312 in the first direction X satisfies 5 mm ≤ B ≤ 20 mm, which enables the end portion 312 to have a large area of connection with another component and ensures that the electrode sheet 30 can have a high capacity to carry the active material.

According to some embodiments of the present application, 6 mm ≤ B ≤ 9 mm.

Compared with the situation that the size B of the end portion 312 in the first direction X satisfies 5 mm ≤ B ≤ 20 m, the size B of the end portion 312 in the first direction X satisfies 6 mm ≤ B ≤ 9 mm, which can not only ensure a larger connection area between the end portion 312 and another component, but also can ensure a larger size of the main body 311 in the first direction X and ensure that the electrode sheet 30 can have a higher active material capacity.

Optionally, the size B in the first direction X may be 6 mm, 7 mm, 8 mm, 9 mm, or the like.

According to some embodiments of the present application, as shown in FIG. 5, the end portion 312 and the main body 311 are arranged in the first direction X, a size of the porous current collector 31 in the first direction X is A, and the size of the end portion 312 in the first direction X is B, satisfying 5% ≤ B/A ≤ 20%.

In a case that the size A of the porous current collector 31 in the first direction X is constant, if B/A is less than 5%, the size of the end portion 312 in the first direction X is smaller, and the connection area between the end portion 312 and another component is smaller; and if B/A is greater than 20%, the size of the end portion 312 in the first direction X is larger, the size of the main body 311 in the first direction X is correspondingly smaller, and the main body 311 is a portion of the electrode sheet 30 where the active material is disposed, so that the capacity of the active material in the electrode sheet 30 is reduced to affect the energy density of the battery cell 20.

In the foregoing solution, the size B of the end portion 312 in the first direction X and the size A of the porous current collector 31 in the first direction X satisfy 5% ≤ B/A ≤ 20%. On the one hand, the end portion 312 has a large area of connection with another component. On the other hand, a larger size of the main body 311 in the first direction X is ensured, so that the porous current collector 31 has more metal ion deposition sites, the main body 311 can attach more active materials, the electrode sheet 30 can have a higher active material capacity, and the energy density of the battery cell 20 is higher.

According to some embodiments of the present application, 5% ≤ B/A ≤ 10%.

Compared with 5% ≤ B/A ≤ 20%, the size B of the end portion 312 in the first direction X and the size A of the porous current collector 31 in the first direction X satisfy 5% ≤ B/A ≤ 10%, indicating a smaller size of the end portion 312 in the first direction X and a larger size of the main body 311 in the first direction X, so that the electrode sheet 30 can have a higher active material capacity.

According to some embodiments of the present application, a porosity of the end portion 312 is less than that of the main portion 311, and the porosity of the main portion 311 is 95%.

According to some embodiments of the present application, the porosity of the end portion 312 is 50-80%.Porosity = (1 - (mass of a porous material [g]/ (volume of the porous material [cm3]) × density of the material) × 100 [%].

According to some embodiments of the present application, the porosity of the end portion 312 is 62.5-75%.

Optionally, the porosity of the end portion 312 may be 62.5%, 65%, 70%, 75%, or the like.

According to some embodiments of the present application, an areal density of the end portion 312 is 300-500 g/m².

The areal density ρ_{A} may be obtained from a formula ρ_{A}=ρ_{V} L=mL/V, where ρ_{V} is a volume density of a material, L is a length of the material, m is a mass of the material, and V is a volume of the material.

In the foregoing solution, the areal density of the end portion 312 satisfies the foregoing range, so that the structure of the end portion 312 is compact to improve the strength and cutting performance of the end portion 312.

According to some embodiments of the present application, the areal density of the end portion 312 is 350-450 g/m².

Optionally, the areal density of the end portion 312 may be 350 g/m², 375 g/m², 400 g/m², 425 g/m², 450 g/m², or the like.

Referring to FIG. 6 and FIG. 7, FIG. 6 is a schematic structural diagram of the porous current collector 31 provided by some embodiments of the present application, and FIG. 7 is a schematic structural diagram of the porous current collector 31 provided by other embodiments of the present application. According to some embodiments of the present application, in the thickness direction Z of the porous current collector 31, the main body 311 has a first surface 3111 and a third surface 3112 that are opposite, the end portion 312 has a second surface 3121 and a fourth surface 3122 that are opposite, and both the second surface 3121 and the fourth surface 3122 are located between a plane where the first surface 3111 is located and a plane where the third surface 3112 is located.

The main body 311 and the end portion 312 are integrally formed. In the thickness direction Z, both the second surface 3121 and the fourth surface 3122 are located between the plane where the first surface 3111 is located and the plane where the third surface 3112 is located, that is, the porous current collector 31 is compressed from two sides of the porous current collector 31 in the thickness direction Z to form the end portion 312, which can reduce stress concentration at a transition place between the end portion 312 and the main body 311 and reduce a probability of fracture of the end portion 312.

In some embodiments, as shown in FIG. 6, the fourth surface 3122 may be coplanar with the third surface 3112, that is, the porous current collector 31 is rolled from one side of the porous current collector 31 to form the end portion 312.

According to some embodiments of the present application, as shown in FIG. 6 and FIG. 7, the porous current collector 31 further includes a transition portion 313, the transition portion 313 connects the main body 311 and the end portion 312, and a thickness of the transition portion 313 gradually decreases from a side connected with the main body 311 to a side connected with the end portion 312.

The transition portion 313 is a portion of the porous current collector 31 for connecting the main body 311 and the end portion 312 to facilitate rolling formation of the end portion 312 from the porous current collector 31.

In the foregoing solution, the transition portion 313 connects the main body 311 and the end portion 312 to facilitate machining of the electrode sheet 30 and reduce machining difficulties.

According to some embodiments of the present application, as shown in FIG. 6 and FIG. 7, the main body 311 has a first surface 3111, the end portion 312 has a second surface 3121, the transition portion 313 has a first transition surface 3131, the first transition surface 3131 connects the first surface 3111 and the second surface 3121, and the first transition surface 3131 is an arc surface tangent to the second surface 3121.

The first transition surface 3131 is an arc surface tangent to the second surface 3121, so when the porous current collector 31 is rolled to form the end portion 312, a mold for rolling the porous current collector 31 may implement the rolling.

In the foregoing solution, the first transition surface 3131 is tangent to the second surface 3121, so that the machining mold is simple in structure and the electrode sheet 30 is convenient to manufacture.

According to some embodiments of the present application, as shown in FIG. 5, a curvature radius of the first transition surface 3131 is R, which satisfies 15 mm ≤ R ≤ 25 mm.

A cross-section of the first transition surface 3131 in the thickness direction Z is an arc surface, and the curvature radius R of the first transition surface 3131 refers to a radius of the arc surface.

In the foregoing solution, the curvature radius of the first transition surface 3131 satisfies the foregoing range, which facilitates machining of the electrode sheet 30.

According to some embodiments of the present application, as shown in FIG. 7, the main body 311 has a third surface 3112 opposite to the first surface 3111, the end portion 312 has a fourth surface 3122 opposite to the second surface 3121, the transition portion 313 has a second transition surface 3132 opposite to the first transition surface 3131, the second transition surface 3132 connects the third surface 3112 and the fourth surface 3122, and the second transition surface 3132 is an arc surface tangent to the fourth surface 3122.

The second transition surface 3132 is an arc surface tangent to the fourth surface 3122, so when the porous current collector 31 is rolled to form the end portion 312, the porous current collector 31 may be rolled from two sides of the porous current collector 31 in the thickness direction Z.

In the foregoing solution, the second transition surface 3132 connects the third surface 3112 and the fourth surface 3122, and the second transition surface 3132 is tangent to the fourth surface 3122, so as to facilitate the manufacturing of the electrode sheet 30.

According to some embodiments of the present application, as shown in FIG. 7, the second transition surface 3132 is symmetric with the first transition surface 3131.

The second transition surface 3132 is symmetric with the first transition surface 3131, that is, the end portion 312 is located in the middle of the main body 311 in the thickness direction Z. When the porous current collector 31 is rolled to form the end portion 312, two identical rollers may be used to roll the porous current collector 31 on the two sides of the porous current collector 31 in the thickness direction Z, thereby ensuring a force balance in the porous current collector 31 and facilitating formation of the end portion 312.

In the foregoing solution, the end portion 312 may be formed by squeezing the porous current collector 31 on the two opposite sides, so as to facilitate the machining of the electrode sheet 30 and ensure the concentrated current distribution of the end portion 312.

According to some embodiments of the present application, as shown in FIG. 5, the end portion 312, the transition portion 313, and the main body 311 are arranged in the first direction X, and a size of the transition portion 313 in the first direction X is C, which satisfies 0.5 mm ≤ C ≤ 2 mm.

The end portion 312, the transition portion 313, and the main body 311 are arranged in the first direction X, so when the end portion 312 is formed from the porous current collector 31, the porous current collector 31 is rolled at one end of the porous current collector 31 in the first direction X.

In the foregoing solution, the size of the transition portion 313 in the first direction X satisfies the foregoing range, which facilitates the machining of the end portion 312.

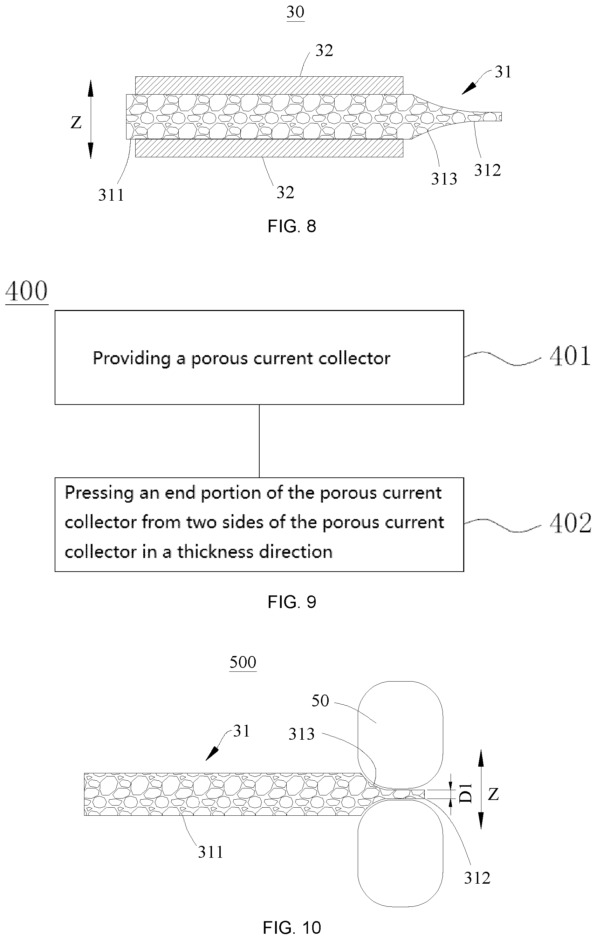

Refer to FIG. 8., FIG. 8 is a schematic structural diagram of the electrode sheet 30 provided by other embodiments of the present application. According to some embodiments of the present application, the electrode sheet 30 further includes an active material layer 32, and the active material layer 32 is disposed on a surface of the main body 311.

The active material layer 32 is disposed on the surface of the main body 311, indicating that the active material layer 32 is disposed on one or two sides of the main body 311 in the thickness direction Z.

In the foregoing solution, the active material layer 32 is disposed on the surface of the main body 311, so that the electrode sheet 30 has a higher active material capacity.

According to some embodiments of the present application, the porous current collector 31 is made of a foam metal or metal mesh.

The foam metal may be foam copper, foam aluminum, foam nickel, foam copper-tin alloy, or the like. The metal mesh may be a copper mesh, an aluminum mesh, a stainless steel mesh, or the like.

Optionally, the foam metal may be foam nickel or foam copper, with high electronic conductivity and low density.

In the foregoing solution, the foam metal has good mechanical properties.

A lithium battery using the foam metal for the current collector may be a lithium-ion battery. In this case, a surface of the foam metal is required to be coated with an active material. For example, when the negative electrode current collector is made of foam copper, the active material may be graphite, silicon, or the like. Meanwhile, the foam metal current collector may alternatively be applied to a lithium metal battery. For example, a foam copper current collector may be used as a negative electrode current collector of the lithium metal battery. In this case, a surface of the foam copper current collector may be coated with an active material. Alternatively, the foam copper current collector may be directly used as a negative electrode.

According to some embodiments of the present application, with reference to FIG. 3, the present application provides a battery cell 20. The battery cell 20 includes a shell assembly and an electrode assembly 23, where the shell assembly includes an electrode leading-out portion; and the electrode assembly 23 is accommodated in the shell assembly, the electrode assembly 23 includes a first electrode sheet and a second electrode sheet with opposite polarities, at least one of the first electrode sheet and the second electrode sheet is the electrode sheet 30 provided in any of the foregoing solutions, and the end portion 312 is electrically connected to the electrode leading-out portion.

The shell assembly includes an end cover 21 and a shell 22, and the electrode leading-out portion is disposed in at least one of the end cover 21 and the shell 22. The end cover 21 refers to a component that is closed to an opening of the shell 22 to isolate an internal environment of the battery cell 20 from an external environment. The shell 22 is a component fitting the end cover 21 to form an internal environment of the battery cell 20, where the formed internal environment may be used for accommodating the electrode assembly 23, an electrolytic solution, and other components.

The electrode leading-out portion is a portion of the battery cell 20 for leading out electrical energy and achieving an electrical connection between the battery cell 20 and another component (such as a current collecting member or another battery cell).

The electrode leading-out portion may be an electrode terminal 21a, and the end portion 312 may be electrically connected to the electrode terminal 21a through an adapter 24, or the end portion 312 may be directly connected to the electrode terminal 21a. The electrode leading-out portion may alternatively be the shell 22, and the end portion 312 may be directly electrically connected to the shell 22, or the end portion 312 may be connected to the shell 22 through a middleware.

According to the battery cell 20 of the embodiment of the present application, at least one of the first electrode sheet and the second electrode sheet is the foregoing electrode sheet 30, where the end portion 312 of the electrode sheet 30 has high mechanical strength to facilitate the electrical connection between the electrode assembly and the electrode leading-out portion.

According to some embodiments of the present application, the present application provides a battery, including a box body and a plurality of battery cells 20 provided by the foregoing embodiments, where the plurality of battery cells 20 are accommodated in the box body.

According to some embodiments of the present application, the present application provides an electrical device, which includes the battery cell(s) 20 provided by the foregoing embodiments, where the battery cell(s) 20 is used for providing electrical energy.

The electrical device may be any of the foregoing devices or systems using the battery cells 20.

According to some embodiments of the present application, with reference to FIG. 4 to FIG. 8, the present application provides an electrode sheet 30, the electrode sheet 30 includes a porous current collector 31, the porous current collector 31 includes a main body 311, a transition portion 313 and an end portion 312 integrally formed, a weight per unit area of the end portion 312 is greater than that of the main body 311, a thickness of the end portion 312 is less than that of the main body 311, the transition portion 313 connects the main body 311 and the end portion 312, a thickness of the transition portion 313 gradually decreases from a side connected with the main body 311 to a side connected with the end portion 312, and the thickness of the end portion 312 is D1, which satisfies 5 µm ≤ D1 ≤ 100 µm.

According to the electrode sheet 30 of the embodiment of the present application, the end portion 312 of the porous current collector 31 is compressed with high mechanical strength, so the end portion 312 can serve as a tab 23a of the electrode sheet 30 to facilitate welding with another component (such as an electrode terminal 21a, a shell 22, or an adapter 24). Meanwhile, the thickness of the end portion 312 satisfies the foregoing range, which meets requirements of die cutting to facilitate machining and concentrates current distribution of the end portion 312 to achieve good cycle performance.

FIG. 9 shows a schematic flowchart of a manufacturing method 400 for an electrode sheet provided by some embodiments of the present application. As shown in FIG. 9, the manufacturing method 400 for an electrode sheet may include:
401: Providing a porous current collector 31; and
402: Pressing an end portion 312 of the porous current collector 31 from two sides of the porous current collector 31 in a thickness direction Z, so that a thickness of the end portion 312 is compressed to 5-100 µm.

It should be pointed out that the end portion 312 is located in the middle of a main body 311 in the thickness direction, so as to balance force on the two sides of the porous current collector 31 in the thickness direction Z during rolling.

According to the manufacturing method 400 for an electrode sheet in the embodiments of the present application, the manufacturing process is simple, the manufactured electrode sheet 30 meets requirements of die cutting to facilitate machining, and current distribution at the end portion 312 is concentrated to achieve good cycle performance.

Refer to FIG. 10. FIG. 10 is a brief schematic diagram of a manufacturing device 500 for an electrode sheets provided by some embodiments of the present application. According to some embodiments of the present application, the present application provides a manufacturing device 500 for an electrode sheet. The manufacturing device 500 for an electrode sheet includes at least one pair of pressure rollers 50, a rolling space is formed in each pair of pressure rollers 50, and a porous current collector 31 is accommodated in the rolling space. Each pair of pressure rollers 50 is used for rolling an end portion 312 of the porous current collector 31 on two sides of the porous current collector 31 in a thickness direction Z, so that a thickness D1 of the end portion 312 satisfies 5 µm ≤ D1 ≤ 100 µm.

As shown in FIG. 10, after the porous current collector 31 is rolled, the end portion 312 is located in the middle of a main body 311 in the thickness direction, so as to balance force on the two sides of the porous current collector 31 in the thickness direction Z during rolling.

According to some embodiments of the present application, the manufacturing method for an electrode sheet further includes a die-cutting process for die-cutting the end portion 312 of the compressed porous current collector 31 into a tab 23a with good consistency in thickness and width.

Next, one or more embodiments will be described in more detail with reference to the following examples. Of course, these examples do not limit the scope of the one or more embodiments.

### Example 1

A foam copper current collector was used as an example. A foam copper raw material having a length of 200 mm and a width of 100 mm was pre-pressed to 120 µm thick foam copper. An end portion 312 of the foam copper current collector was rolled to be 5 µm thick based on the foregoing manufacturing method for an electrode sheet, and a length of a compressed region was 8 mm. After compression, the end portion 312 was die-cut into a tab 23a, and a foam metal electrode sheet was obtained.

### Example 2

Example 2 differed from Example 1 in that the end portion 312 was compressed to be 10 µm thick.

### Example 3

Example 3 differed from Example 1 in that the end portion 312 was compressed to be 20 µm thick.

### Example 4

Example 4 differed from Example 1 in that the end portion 312 was compressed to be 50 µm thick.

### Example 5

Example 5 differed from Example 1 in that the end portion 312 was compressed to be 75 µm thick.

### Example 6

Example 6 differed from Example 1 in that the end portion 312 was compressed to be 100 µm thick.

### Comparative Example 1

A foam copper raw material having a length of 200 mm and a width of 100 mm was pre-pressed to 120 µm thick foam copper, then a tab 23a was directly die-cut, an end portion 312 was not rolled, and the tab 23a had the same width and length as those in Example 6.

### Comparative Example 2

A foam copper raw material having a length of 200 mm and a width of 100 mm was pre-pressed to a 120 µm thick foam copper foil. A thickness of an end portion of a foam copper current collector was compressed to 3 µm based on the foregoing manufacturing method for an electrode sheet, and a length of a compressed region was 8 mm. After compression, a tab 23a was prone to fracture, making it difficult to obtain data.

### Test method

Tensile measurement: The samples manufactured in Examples 1-6 and Comparative Example 1 were measured through a tensile tester. An end, opposite to the tab 23a, of the electrode sheet was fixed, and the tab 23a was stretched to obtain a tensile value displayed at the time of fracture.

Welding tensile test: Welding strength between the tab 23a in the samples manufactured in Examples 1-6 and Comparative Example 1 and an adapter 24 was tested. Test method: The tab 23a in the samples manufactured in Examples 1-6 and Comparative Example 1 was welded to an aluminum strip (the adapter 24), and welding tensile force between the aluminum strip and the tab 23a was tested with the tensile tester.

Experimental parameters and test results involved in Examples 1 to 6 and Comparative Example 1 were shown in Table 1.

**Table 1**

| Number | Thickness of end portion/ µm | Tensile force/ N | Welding tensile force/ N |
|---|---|---|---|
| Example 1 | 5 | 17 | 20 |
| Example 2 | 10 | 21 | 25 |
| Example 3 | 20 | 19 | 18 |
| Example 4 | 50 | 16 | 17 |
| Example 5 | 75 | 14 | 16 |
| Example 6 | 100 | 11 | 13 |
| Comparative Example 1 | 120 | 8 | 10 |

It can be seen from Table 1 that the tab 23a formed by rolling had higher tensile strength than that of the tab directly die-cut from the foam metal, and had strength improved after welded with the adapter 24. When the thickness of the end portion was less than 5 µm, the end portion was prone to tearing, had low mechanical strength, and cannot be used as a tab 23a. When the thickness of the end portion was more than 100 µm, the tensile strength of the end portion was low, and the strength of the end portion was also low after welded with the adapter 24.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. An electrode sheet, comprising a porous current collector, wherein the porous current collector comprises a main body and an end portion which are integrally formed, a weight per unit volume of the end portion is greater than that of the main body, a thickness of the end portion is less than that of the main body, and the thickness of the end portion is D1, which satisfies 5 µm ≤ D1 ≤ 100 µm.

2. The electrode sheet according to claim 1, wherein 5 µm ≤ D1 ≤ 50 µm.

3. The electrode sheet according to claim 1 or 2, wherein 10 µm ≤ D1 ≤ 20 µm.

4. The electrode sheet according to any one of claims 1-3, wherein the thickness of the main body is D2, which satisfies 10% ≤ D1/D2 ≤ 15%.

5. The electrode sheet according to any one of claims 1-4, wherein the end portion and the main body are arranged in a first direction, and a size of the end portion in the first direction is B, which satisfies 5 mm ≤ B ≤ 20 mm.

6. The electrode sheet according to claim 5, wherein 6 mm ≤ B ≤ 9 mm.

7. The electrode sheet according to any one of claims 1-6, wherein the end portion and the main body are arranged in a first direction, a size of the porous current collector in the first direction is A, and a size of the end portion in the first direction is B, satisfying 5% ≤ B/A ≤ 20%.

8. The electrode sheet according to claim 7, wherein 5% ≤ B/A ≤ 10%.

9. The electrode sheet according to any one of claims 1-8, wherein a porosity of the end portion is 50-80%.

10. The electrode sheet according to claim 9, wherein the porosity of the end portion is 62.5-75%.

11. The electrode sheet according to any one of claims 1-10, wherein an areal density of the end portion is 300-500 g/m².

12. The electrode sheet according to claim 11, wherein the areal density of the end portion is 350-450 g/m².

13. The electrode sheet according to any one of claims 1-12, wherein in a thickness direction of the porous current collector, the main body has a first surface and a third surface that are opposite to each other, the end portion has a second surface and a fourth surface that are opposite to each other, and both the second surface and the fourth surface are located between a plane where the first surface is located and a plane where the third surface is located.

14. The electrode sheet according to any one of claims 1-13, wherein the porous current collector further comprises a transition portion, the transition portion connects the main body and the end portion, and a thickness of the transition portion gradually decreases from a side connected with the main body to a side connected with the end portion.

15. The electrode sheet according to claim 14, wherein the main body has a first surface, the end portion has a second surface, the transition portion has a first transition surface, the first transition surface connects the first surface and the second surface, and the first transition surface is an arc surface tangent to the second surface.

16. The electrode sheet according to claim 15, wherein a curvature radius of the first transition surface is R, which satisfies 15 mm ≤ R ≤ 25 mm.

17. The electrode sheet according to claim 15 or 16, wherein the main body has a third surface opposite to the first surface, the end portion has a fourth surface opposite to the second surface, the transition portion has a second transition surface opposite to the first transition surface, the second transition surface connects the third surface and the fourth surface, and the second transition surface is an arc surface tangent to the fourth surface.

18. The electrode sheet according to claim 17, wherein the second transition surface is symmetric with the first transition surface.

19. The electrode sheet according to claim 14, wherein the end portion, the transition portion, and the main body are arranged in the first direction, and a size of the transition portion in the first direction is C, which satisfies 0.5 mm ≤ C ≤ 2 mm.

20. The electrode sheet according to any one of claims 1-19, wherein the electrode sheet further comprises an active material layer, and the active material layer is disposed on a surface of the main body.

21. The electrode sheet according to any one of claims 1-20, wherein the porous current collector is made of a foam metal.

22. A battery cell, comprising:
a shell assembly, comprising an electrode leading-out portion; and
an electrode assembly accommodated in the shell assembly, wherein the electrode assembly comprises a first electrode sheet and a second electrode sheet with opposite polarities, at least one of the first electrode sheet and the second electrode sheet is the electrode sheet according to any one of claims 1-21, and the end portion is electrically connected to the electrode leading-out portion.

23. A battery, comprising a box body and a plurality of battery cells each according to claim 22, wherein the plurality of battery cells are accommodated in the box body.

24. An electrical device, comprising at least one battery cell according to claim 22, wherein the at least one battery cell is used for providing electrical energy.

25. A manufacturing method for an electrode sheet, comprising:
providing a porous current collector; and
pressing an end portion of the porous current collector from two sides of the porous current collector in a thickness direction, so that a thickness of the end portion is compressed to 5-100 µm.
